# EUROPEAN PATENT APPLICATION

(11) **EP 4 503 297 A1**
(43) Date of publication of application: **05.02.2025**
(21) Application number: 23780986.8
(22) Date of filing: 30.03.2023
(51) Int. Cl.: H01M 50/342, H01M 50/103, H01M 50/15

(54) **BATTERY**

(30) Priority: 30.03.2022 JP 2022055543
(71) Applicant: Vehicle Energy Japan Inc., Ibaraki 312-8505 (JP)
(72) Inventor: EGAWA, Hiroaki, Hitachinaka-shi, Ibaraki 312-8505 (JP)
(74) Representative: Mewburn Ellis LLP
(86) International application number: PCT/JP2023/013379
(87) International publication number: WO 2023/190978

(57) **Abstract**

A battery (1) including a safety valve (cleavage valve (80)) having relatively high durability and capable of efficiently discharging gas inside the battery (1) when cleaving is provided. The battery (1) includes a charge/discharge body (10), an exterior body (50) in which the charge/discharge body (10) is housed, and the safety valve (the cleavage valve (80)) provided at the exterior body (50) and configured to open from inside the exterior body (50) to outside when pressure of inside of the exterior body (50) becomes equal to or larger than a predetermined value. A thickness of the cleavage valve (80) is smaller than a thickness of the exterior body (50). An annular edge section (81) of the cleavage valve (80), which is continuous to the exterior body (50) includes a first edge section (81a) formed in an arc shape and a second edge section (81b) formed with a radius larger than a radius of the first edge section (81a) or formed in a linear shape. At least the first edge section (81a) includes a groove.

## Description

### [Technical Field]

The present invention relates to a battery.

### [Background Art]

Conventionally, a safety valve configured to open from inside to outside when the pressure inside a battery becomes equal to or larger than a predetermined value so that gas is discharged from the battery, has been known (refer to Patent Document 1, for example).

### [Citation List]

### [Patent Literature]

[Patent Literature 1] WO 2012/111742

### [Summary of Invention]

### [Technical Problem]

Recently, a safety valve of a battery has been demanded to have relatively high durability and efficiently discharge gas inside the battery when cleaving.

### [Solution to Problem]

A battery of the present invention includes a charge/discharge body, an exterior body in which the charge/discharge body is housed, and a safety valve provided at the exterior body and configured to open from inside the exterior body to outside when pressure inside the exterior body becomes equal to or larger than a predetermined value. A thickness of the safety valve is smaller than a thickness of the exterior body. An annular edge section of the safety valve, which is continuous to the exterior body includes a first edge section formed in an arc shape and a second edge section formed with a radius larger than a radius of the first edge section or formed in a linear shape. At least the first edge section includes a groove.

### [Advantageous Effects of Invention]

The present invention can provide a battery including a safety valve having relatively high durability and capable of efficiently discharging gas inside the battery when cleaving.

### [Brief Description of Drawings]

[Figure 1] Figure 1 is a perspective view showing a battery 1 in a first embodiment.
[Figure 2] Figure 2 is a sectional perspective view showing a periphery of a negative electrode terminal 42 of the battery 1 in the first embodiment.
[Figure 3] Figure 3 is a cross-sectional view showing the periphery of the negative electrode terminal 42 of the battery 1 in the first embodiment.
[Figure 4] Figure 4 is a sectional perspective view showing a periphery of a positive electrode terminal 41 of the battery 1 in the first embodiment.
[Figure 5] Figure 5 is a cross-sectional view showing the periphery of the positive electrode terminal 41 of the battery 1 in the first embodiment.
[Figure 6] Figure 6 is an exploded perspective view showing the battery 1 in the first embodiment.
[Figure 7] Figure 7 is a perspective view showing a charge/discharge body 10 of the battery 1 in the first embodiment.
[Figure 8] Figure 8 is a cross-sectional view showing a part of the charge/discharge body 10 of the battery 1 in the first embodiment.
[Figure 9] Figure 9 is a cross-sectional view showing a part of a charge/discharge body 110 of a modification of the battery 1 in the first embodiment.
[Figure 10] Figure 10 is an exploded perspective view showing the periphery of the negative electrode terminal 42 of the battery 1 in the first embodiment.
[Figure 11] Figure 11 is an exploded perspective view showing a lid 52 and a sealing plug 53 of the battery 1 in the first embodiment.
[Figure 12] Figure 12 is an exploded perspective view showing the periphery of the positive electrode terminal 41 of the battery 1 in the first embodiment.
[Figure 13] Figure 13 is a perspective view showing a periphery of a cleavage valve 80 of the battery 1 in the first embodiment from the charge/discharge body 10 side.
[Figure 14] Figure 14 is a cross-sectional view showing the periphery of the cleavage valve 80 of the battery 1 in the first embodiment.
[Figure 15] Figure 15 is a perspective view showing simulated deformation of the cleavage valve 80 of the battery 1 in the first embodiment from the charge/discharge body 10 side.
[Figure 16] Figure 16 is a cross-sectional view showing simulated deformation of the cleavage valve 80 of the battery 1 in the first embodiment.
[Figure 17] Figure 17 is a plan view showing simulated deformation of the cleavage valve 80 of the battery 1 in the first embodiment from the charge/discharge body 10 side.
[Figure 18] Figure 18 is a cross-sectional view showing a periphery of a cleavage valve 180 of a battery 2 in a second embodiment.
[Figure 19] Figure 19 is a cross-sectional view showing a periphery of a cleavage valve 280 of a battery 3 in a third embodiment.
[Figure 20] Figure 20 is a cross-sectional view showing a periphery of a cleavage valve 380 of a battery 4 in a fourth embodiment.
[Figure 21] Figure 21 is a cross-sectional view showing a periphery of a cleavage valve 480 of a battery 5 in Modification 1 of the fourth embodiment.
[Figure 22] Figure 22 is a perspective view showing a periphery of a cleavage valve 580 of a battery 6 in a fifth embodiment from the charge/discharge body 10 side.

### [Description of Embodiments]

Each of embodiments of the present invention is explained with reference to the drawings. To facilitate understanding of each of the embodiments, sizes and ratios of constituent members are sometimes exaggerated in the drawings. In each of the embodiments, the same reference numerals and signs are given to the same components and redundant explanation of the components is omitted. In each of the embodiments, a left-handed XYZ orthogonal coordinate system in which an X axis, a Y axis, and a Z axis are set as coordinate axes is used. Arrows of the axes of the X axis, the Y axis, and the Z axis indicate positive directions of the coordinate axes. The X axis is a coordinate axis in a longitudinal direction of a rectangular parallelepiped battery. The Y axis is a coordinate axis in a latitudinal direction of the battery. The Z axis is a coordinate axis in a height direction of the battery. A plane formed by the X axis and the Y axis is referred to as an XY plane, a plane formed by the Y axis and the Z axis is referred to as a YZ plane, and a plane formed by the X axis and the Z axis is referred to as an XZ plane. However, a positional relation represented by the XYZ orthogonal coordinate system is only a relative positional relation.

### [First embodiment]

### (Configuration of battery 1 in first embodiment)

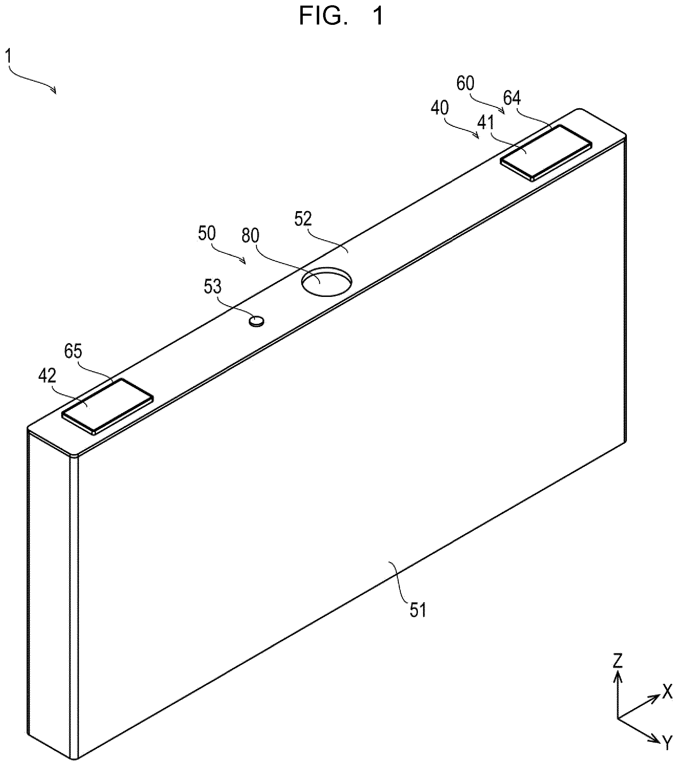

A configuration of a battery 1 in a first embodiment is explained with reference to Figure 1 to Figure 14.

The battery 1 includes, for example, as shown in Figure 1 to Figure 14, a charge/discharge body 10 that charges and discharges electricity, a current collector 20 coupled to the charge/discharge body 10, a current interrupter 30 coupled to the current collector 20, an external terminal 40 coupled to the current collector 20 or the current interrupter 30, and an exterior body 50 in or to which the constituent members of the battery 1 is housed or attached. The battery 1 includes an insulator 60 that insulates the constituent members of the battery 1 and the exterior body 50, a sealing body 70 that seals the constituent members of the battery 1 and the exterior body 50, and a cleavage valve 80 (safety valve) that discharges gas from inside the exterior body 50 to the outside.

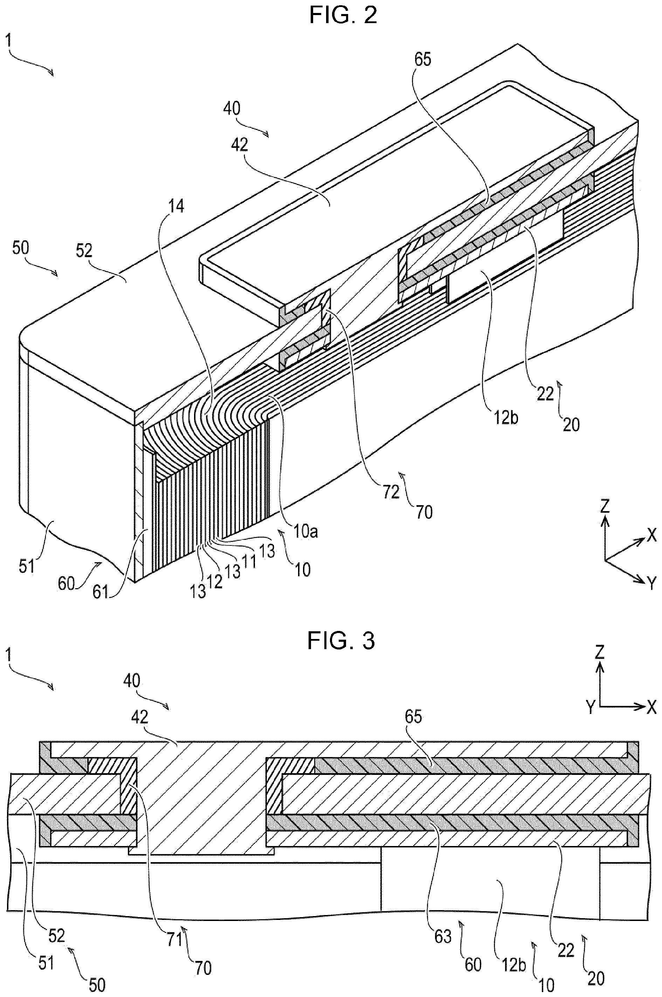

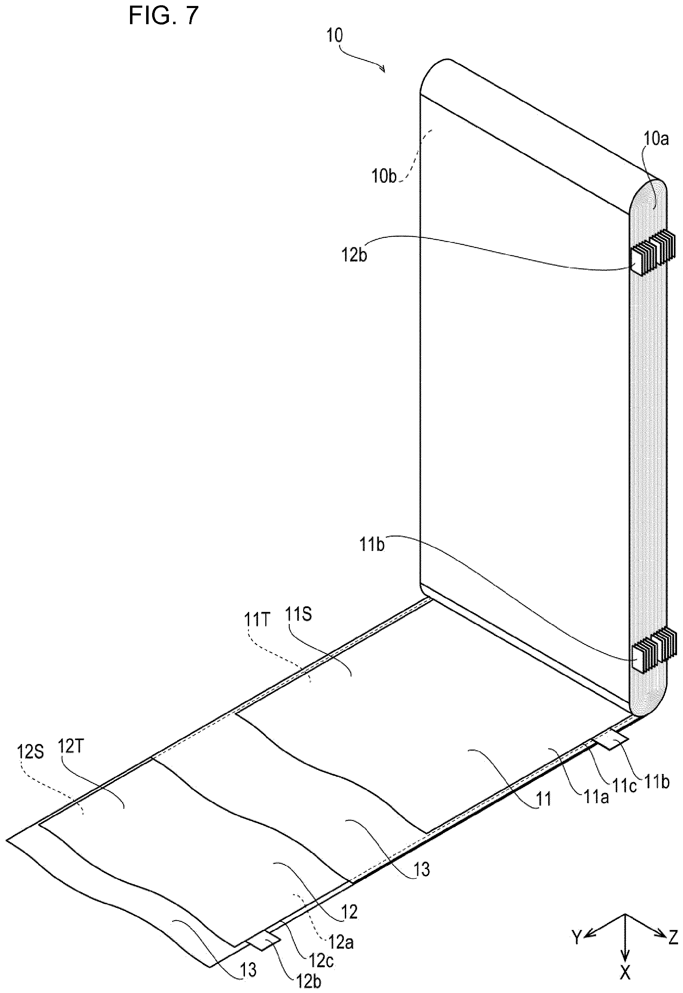

The charge/discharge body 10 charges and discharges electricity. The charge/discharge body 10 shown in Figure 2 to Figure 8 includes a positive electrode 11, a negative electrode 12, separators 13 (insulating members), and an electrolyte 14. As shown in Figure 7, the charge/discharge body 10 is configured by winding, in a rectangular parallelepiped shape, the constituent members stacked in the order of the positive electrode 11, the separators 13, the negative electrode 12, and the separators 13.

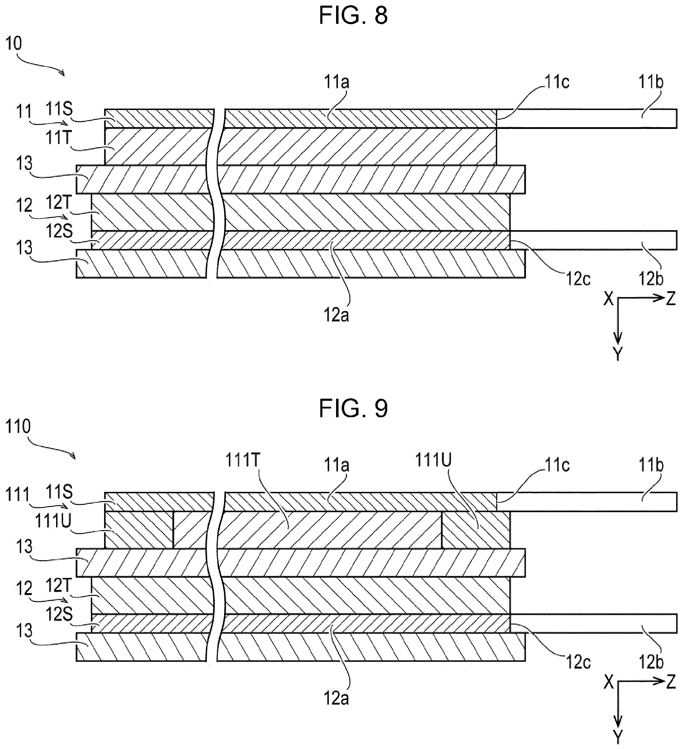

The positive electrode 11 includes, for example, as shown in Figure 7 and Figure 8, a long positive electrode current collection layer 11S (current collection layer) and a positive electrode active material layer 11T joined to the positive electrode current collection layer 11S. The positive electrode current collection layer 11S includes a current collection section 11a and a positive electrode tab 11b. The current collection section 11a is wound. The positive electrode active material layer 11T is joined to the current collection section 11a. As shown in Figure 8, the positive electrode active material layer 11T faces, for example, the entire area extending in the latitudinal direction (the Z-axis direction) of the current collection section 11a.

For example, as shown in Figure 7 and Figure 8, the positive electrode tab 11b projects in the latitudinal direction of the current collection section 11a from a side edge 11c extending in the longitudinal direction (a winding direction) of the current collection section 11a. The positive electrode tab 11b is formed integrally with the current collection section 11a. A plurality of positive electrode tabs 11b are formed in one current collection section 11a.

The positive electrode tabs 11b are formed with so-called unequal pitches. That is, the interval between the positive electrode tabs 11b adjacent to each other in the winding direction is such that the adjacent positive electrode tab 11b on a side closer to the other end section 11q where winding of the current collection section 11a ends is formed relatively longer than the adjacent positive electrode tab 11b on a side closer to one end section 11p where winding of the current collection section 11a starts. All positive electrode tabs 11b overlap in a state in which the current collection section 11a is wound.

The positive electrode tabs 11b may be integrated with the current collection section 11a or may be separated from the current collection section 11a. A plurality of terminal sections are provided at side edges (at least one of the side edges) of the current collection section 11a in the winding direction (the longitudinal direction).

The current collection section 11a of the positive electrode 11 is formed by, for example, aluminum or an aluminum alloy. The positive electrode active material layer 11T includes a positive electrode active material, a binder, a conductive auxiliary agent, and the like formed by a lithium-containing complex oxide. As the lithium-containing complex oxide, for example, a metal element such as nickel (Ni), cobalt (Co), or manganese (Mn) and lithium (Li) are used.

The negative electrode 12 includes, for example, as shown in Figure 7 and Figure 8, a long negative electrode current collection layer 12S (current collection layer) and a negative electrode active material layer 12T joined to the negative electrode current collection layer 12S. The negative electrode current collection layer 12S includes a current collection section 12a and a negative electrode tab 12b. As shown in Figure 8, the current collection section 12a of the negative electrode 12 is longer in width in the latitudinal direction (the Z-axis direction) compared with the current collection section 11a of the positive electrode 11. Both the ends in the latitudinal direction of the current collection section 11a of the positive electrode 11 are located via the separators 13 within a range extending in the latitudinal direction of the current collection section 12a of the negative electrode 12. The negative electrode active material layer 12T is joined to the current collection section 12a. The negative electrode active material layer 12T faces, for example, the entire area extending in the latitudinal direction of the current collection section 12a (the Z-axis direction).

For example, as shown in Figure 7 and Figure 8, the negative electrode tab 12b projects in the latitudinal direction of the current collection section 12a from a side edge 12c extending in the longitudinal direction of the current collection section 12a (the winding direction). The negative electrode tab 12b projects in the same direction as the direction of the positive electrode tab 11b of the positive electrode 11 in a state in which the negative electrode tab 12b is stacked with the positive electrode 11 via the separators 13. The negative electrode tab 12b is separated from the positive electrode tab 11b of the positive electrode 11 in the state in which the negative electrode tab 12b is stacked with the positive electrode 11 via the separators 13. The negative electrode tab 12b is formed integrally with the current collection section 12a. A plurality of negative electrode tabs 12b are formed in one current collection section 12a.

Similarly to the positive electrode tabs 11b, the negative electrode tabs 12b are formed with unequal pitches. That is, the interval between the negative electrode tabs 12b adjacent to each other in the winding direction is such that the adjacent negative electrode tab 12b on a side closer to the other end section 12q where winding of the current collection section 12a ends is formed relatively longer the adjacent negative electrode tab 12b on a side closer to one end section 12p where winding of the current collection section 12a starts. All negative electrode tabs 12b overlap in a state in which the current collection section 12a is wound.

The negative electrode tabs 12b may be integrated with the current collection section 12a or may be separated from the current collection section 12a. A plurality of terminal sections are provided at side edges (at least one of the side edges) of the current collection section 12a in the winding direction (the longitudinal direction).

The current collection section 12a of the negative electrode 12 is formed by, for example, copper or a copper alloy. The negative electrode active material layer 12T includes a negative electrode active material, a binder, a conductive auxiliary agent, and the like formed by a carbon-based material. As the carbon-based material, for example, graphite is used.

For example, as shown in Figure 7 and Figure 8, the separator 13 (an insulator) allows lithium ions to pass while insulating the positive electrode 11 and the negative electrode 12. The separators 13 is formed long. The separators 13 is long in width in the latitudinal direction (the Z-axis direction) compared with the current collection section 11a of the positive electrode 11 and the current collection section 12a of the negative electrode 12. Both the ends in the latitudinal direction of the current collection section 11a of the positive electrode 11 are located and both the ends in the latitudinal direction of the current collection section 12a of the negative electrode 12 are located within a range extending in the latitudinal direction of the separators 13. The separator 13 is made of a porous material. As the separator 13, polyethylene (PE) or polypropylene (PP) is used. A heat resistant insulating member may be used instead of the separator 13. As the heat resistant insulating member, for example, ceramics is used. The configuration explained above is a so-called separator-less configuration.

The electrolyte 14 is equivalent to a so-called electrolytic solution. The electrolyte 14 is impregnated in the separator 13. The electrolyte 14 includes an organic solvent, a supporting electrolyte, and an additive. As the organic solvent, for example, carbonic ester is used. As the supporting electrolyte, for example, lithium salt is used.

A charge/discharge body 110 that is a modification of the charge/discharge body 10 is explained with reference to Figure 9. In the charge/discharge body 110, a configuration of a positive electrode 111 is different from the configuration of the positive electrode 11 in the first embodiment. In a configuration of the charge/discharge body 110, the same reference numerals are added to the same components as the components of the charge/discharge body 10 and explanation of the components is omitted. A positive electrode active material layer 111T of the charge/discharge body 110 faces a portion excluding both the ends extending in the latitudinal direction of the current collection section 11a (the Z-axis direction). A heat resistant insulating layer 111U of the charge/discharge body 110 is joined to both the ends extending in the latitudinal direction of the current collection section 11a and a proximal end portion of the positive electrode tab 11b. The heat resistant insulating layer 111U includes, for example, ceramics.

The current collector 20 is electrically coupled to the charge/discharge body 10. The current collector 20 shown in Figure 2 to Figure 5, Figure 10, and Figure 12 includes a positive electrode current collection plate 21 and a negative electrode current collection plate 22.

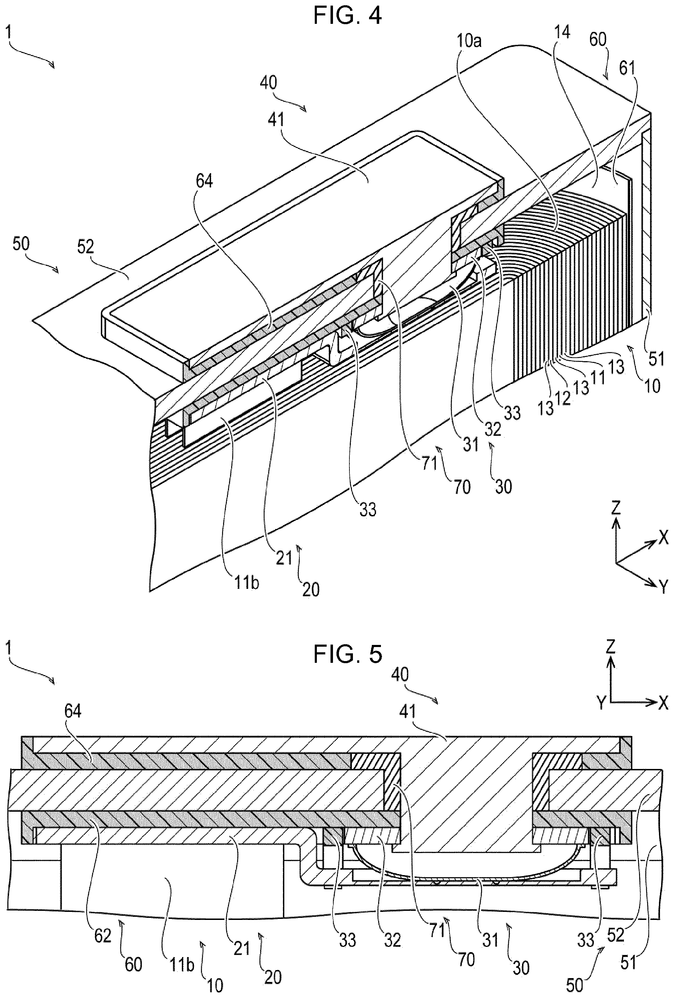

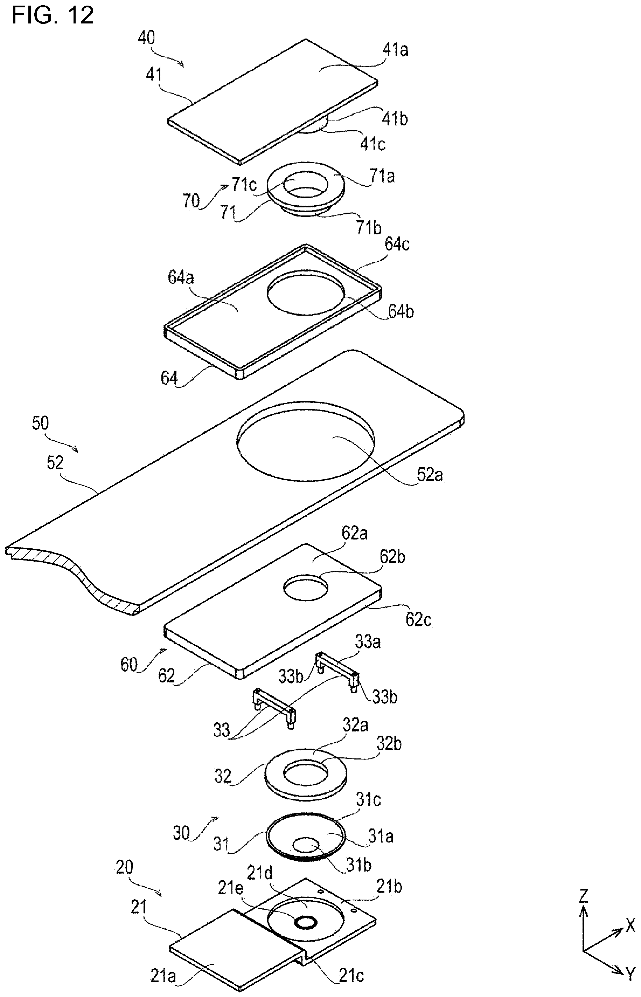

For example, as shown in Figure 4 and Figure 5, the positive electrode current collection plate 21 electrically couples the positive electrode tab 11b of the charge/discharge body 10 and a positive electrode terminal 41 via the current interrupter 30. The positive electrode current collection plate 21 includes, for example, as shown in Figure 12, a rectangular parallelepiped plate-like first base section 21a, a rectangular parallelepiped plate-like second base section 21b, and a coupling section 21c that couples the first base section 21a and the second base section 21b stepwise at different heights. A recess 21d where the second base section 21b is formed thin is formed on the upper surface (the surface on the Z-axis positive direction side) of the second base section 21b. A fragile section 21e, which is a fragile portion hollowed in a ring shape, is formed at the center of the recess 21d. The positive electrode current collection plate 21 is formed by, for example, aluminum or an aluminum alloy.

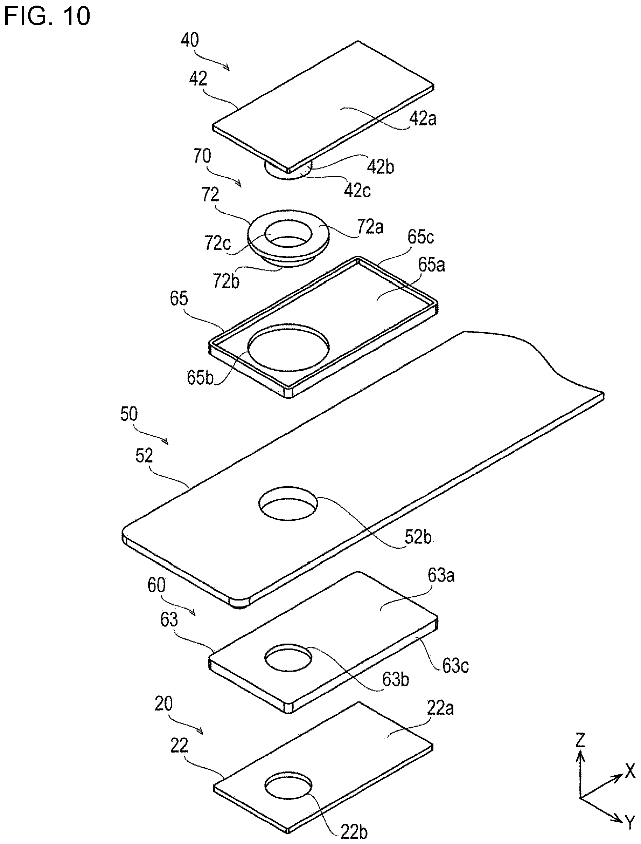

For example, as shown in Figure 2 and Figure 3, the negative electrode current collection plate 22 electrically couples the negative electrode tab 12b of the charge/discharge body 10 and a negative electrode terminal 42. The negative electrode current collection plate 22 includes, for example, as shown in Figure 10, a rectangular parallelepiped plate-like base section 22a and an insertion hole 22b piercing through the base section 22a. An insertion section 42b of the negative electrode terminal 42 is inserted into the insertion hole 22b of the negative electrode current collection plate 22. The negative electrode current collection plate 22 is formed by, for example, copper or a copper alloy.

The current interrupter 30 is coupled to the current collector 20 and electrically couples the current collector 20 and the positive electrode terminal 41. The current interrupter 30 shown in Figure 4, Figure 5, and Figure 12 includes the diaphragm 31, an electrical connection member 32, and a pair of supporting tables 33.

The diaphragm 31 includes, as shown in, for example, Figure 12, a curved cylindrical main body 31a, a disk-shaped first joining section 31b provided on the distal end side (the Z-axis negative direction side) of the main body 31a, and a ring-like second joining section 31c provided on the proximal end side (the Z-axis positive direction side) of the main body 31a. The first joining section 31b is joined to the recess 21d of the positive electrode current collection plate 21. The second joining section 31c is joined to the electrical connection member 32. The diaphragm 31 is formed by, for example, aluminum or an aluminum alloy.

As shown in, for example, Figure 12, the electrical connection member 32 is formed in a cylindrical shape. A positive electrode side first insulation plate 62 is joined to the upper surface (the surface on the Z-axis positive direction side) of the electrical connection member 32. The second joining section 31c of the diaphragm 31 is joined to the peripheral edge of the lower surface (the surface on the Z-axis negative direction side) of the electrical connection member 32. The electrical connection member 32 is formed by, for example, aluminum or an aluminum alloy.

The supporting tables 33 include, as shown in, for example, Figure 12, a rectangular parallelepiped main body 33a extending in the latitudinal direction (the Y-axis direction) of the battery 1 and leg sections 33b extending downward (the Z-axis negative direction) from both the sides in the longitudinal direction the (Y-axis direction) of the main body 33a. One supporting table 33 is provided at each of both the ends in the longitudinal direction (the X-axis direction) of the battery 1 of the diaphragm 31. The main body 33a is attached to the positive electrode side first insulation plate 62. The leg sections 33b are attached to the second base section 21b of the positive electrode current collection plate 21. The supporting table 33 is formed by, for example, insulating resin.

The external terminal 40 is coupled to the current collector 20 or the current interrupter 30. The external terminal 40 shown in Figure 1 to Figure 6 and Figure 10 and Figure 12 includes the positive electrode terminal 41 and the negative electrode terminal 42.

For example, as shown in Figure 5 the positive electrode terminal 41 is coupled to the electrical connection member 32 of the current interrupter 30. The positive electrode terminal 41 includes, for example, as shown in Figure 12, a rectangular parallelepiped plate-like base section 41a, a columnar insertion section 41b projecting downward (in the Z-axis negative direction) from the base section 41a, and a cylindrical joining section 41c projecting downward (in the Z-axis negative direction) from the peripheral edge of the base section 41a.

For example, as shown in Figure 12, the base section 41a is in contact with a base section 64a of a positive electrode side second insulation plate 64. The insertion section 41b is inserted into an insertion hole 64b of the positive electrode side second insulation plate 64, a positive electrode side insertion hole 52a of a lid 52, an insertion hole 62b of the positive electrode side first insulation plate 62, and an insertion hole 32b of the electrical connection member 32.

For example, as shown in Figure 12, the joining section 41c projects downward (in the Z-axis negative direction) from the insertion hole 32b of the electrical connection member 32 and is expanded outward in the radial direction and joined to the electrical connection member 32. That is, the joining section 41c is caulked at the peripheral edge of the insertion hole 32b of the electrical connection member 32. Further, the joining section 41c is welded at the peripheral edge of the insertion hole 32b of the electrical connection member 32. The positive electrode terminal 41 is formed by, for example, aluminum or an aluminum alloy.

For example, as shown in Figure 3, the negative electrode terminal 42 is coupled to the negative electrode current collection plate 22. The negative electrode terminal 42 includes, for example, as shown in Figure 10, a rectangular parallelepiped plate-like base section 42a, the columnar insertion section 42b projecting downward (in the Z-axis negative direction) from the base section 42a, and a cylindrical joining section 42c projecting downward (in the Z-axis negative direction) from the peripheral edge of the base section 42a.

For example, as shown in Figure 10, the base section 42a is in contact with a base section 65a of a negative electrode side second insulation plate 65. The insertion section 42b is inserted into an insertion hole 65b of the negative electrode side second insulation plate 65, a negative electrode side insertion hole 52b of the lid 52, an insertion hole 63b of a negative electrode side first insulation plate 63, and the insertion hole 22b of the negative electrode current collection plate 22.

For example, as shown in Figure 10, the joining section 42c projects downward from the insertion hole 22b of the negative electrode current collection plate 22 and is expanded outward in the radial direction and joined to the negative electrode current collection plate 22. That is, the joining section 42c is caulked at the peripheral edge of the insertion hole 22b of the negative electrode current collection plate 22. Further, the joining section 42c is welded at the peripheral edge of the insertion hole 22b of the negative electrode current collection plate 22. The negative electrode terminal 42 is formed by, for example, copper or a copper alloy.

The constituent members of the battery 1 is housed in or attached to the exterior body 50. The exterior body 50 shown in Figure 1 to Figure 6 and Figure 10 to Figure 12 includes a container 51, the lid 52, and a sealing plug 53.

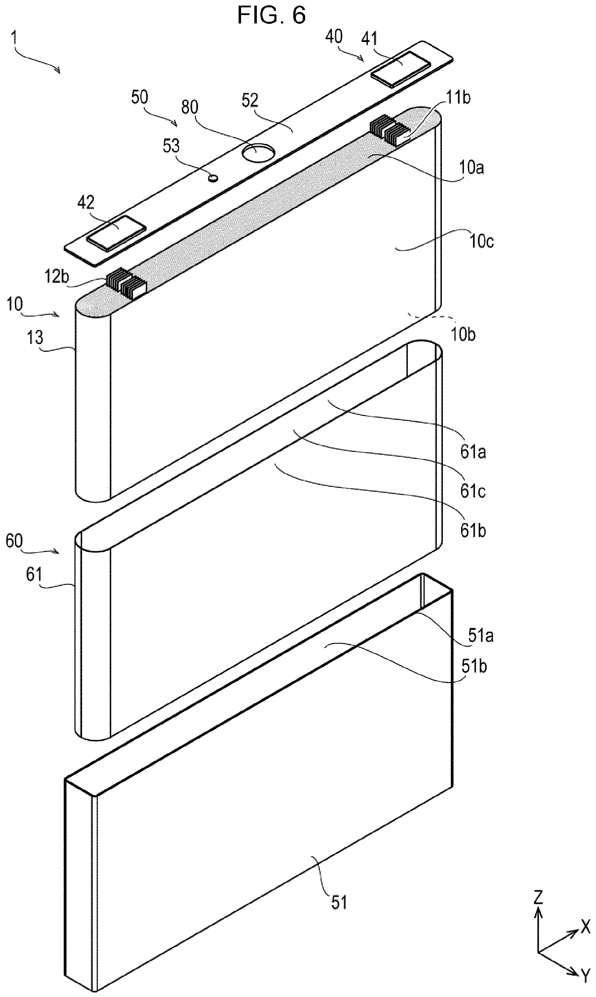

For example, as shown in Figure 2 and Figure 6, the container 51 houses the charge/discharge body 10 and the like covered by an insulation cover 61. The container 51 is configured by a rectangular parallelepiped metal can. The container 51 includes, for example, as shown in Figure 6, an opening 51a opened in the longitudinal direction and an enclosure section 51b stretching to the opening 51a. The container 51 is formed by, for example, aluminum or an aluminum alloy.

For example, as shown in Figure 2 and Figure 6, the lid 52 seals the opening 51a of the container 51. The lid 52 faces, in the charge/discharge body 10, one side section 10a (a side section) adjacent to the positive electrode 11, the separator 13, and the negative electrode 12. The lid 52 is formed by a long plate-like metal plate. In the lid 52, the positive electrode side insertion hole 52a configured by a circular through-hole is formed on one end side in the longitudinal direction. The insertion section 41b of the positive electrode terminal 41 is inserted into the positive electrode side insertion hole 52a. In the lid 52, the negative electrode side insertion hole 52b configured by a circular through-hole is formed on the other end side in the longitudinal direction. The insertion section 42b of the negative electrode terminal 42 is inserted into the negative electrode side insertion hole 52b.

In the lid 52, a liquid injection hole 52c configured by a circular through-hole is formed between the positive electrode side insertion hole 52a and the negative electrode side insertion hole 52b. The electrolyte 14 is injected from the lid 52 toward the container 51 via the liquid injection hole 52c. An insertion section 53b of the sealing plug 53 is inserted into the liquid injection hole 52c. In the lid 52, a cleavage valve 80 is formed in the center in the longitudinal direction. The lid 52 is welded to the container 51. The lid 52 is formed by, for example, aluminum or an aluminum alloy.

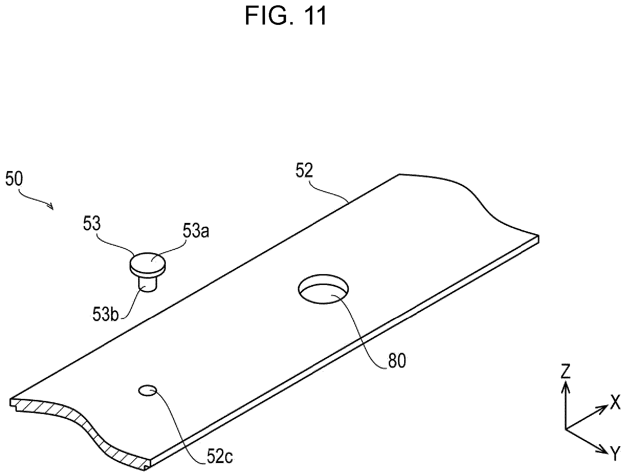

For example, as shown in Figure 11, the sealing plug 53 seals the liquid injection hole 52c of the lid 52. The sealing plug 53 is formed in a columnar shape. The sealing plug 53 includes a head section 53a having a relatively large outer diameter and the insertion section 53b continuous to the head section 53a and having a relatively small outer diameter. The head section 53a of the sealing plug 53 is welded to the lid 52. The sealing plug 53 is formed by, for example, aluminum or an aluminum alloy.

The insulator 60 insulates the constituent members of the battery 1 and the exterior body 50. The insulator 60 shown in Figure 1 to Figure 6, Figure 10, and Figure 12 includes the insulation cover 61, the positive electrode side first insulation plate 62, the negative electrode side first insulation plate 63, the positive electrode side second insulation plate 64, and the negative electrode side second insulation plate 65.

For example, as shown in Figure 6, the insulation cover 61 covers and insulates the charge/discharge body 10. The insulation cover 61 includes a pair of side surfaces (a first side surface 61a and a second side surface 61b) facing each other and an opening 61c that exposes the one side section 10a of the charge/discharge body 10 between the first side surface 61a (one of the side surfaces) and the second side surface 61b (the other side surface). The insulation cover 61 covers surfaces other than one surface of the one side section 10a of the charge/discharge body 10. That is, the insulation cover 61 covers the other side section 10b facing the one side section 10a of the charge/discharge body 10 and an outer circumferential section 10c located between the one side section 10a and the other side section 10b of the charge/discharge body 10. The insulation cover 61 is formed in a pentahedron shape by folding a polyhedral sheet in a box shape. The insulation cover 61 is formed by, for example, polypropylene.

For example, as shown in Figure 5, the positive electrode side first insulation plate 62 insulates the positive electrode current collection plate 21 and the electrical connection member 32 from the lid 52. The positive electrode side first insulation plate 62 includes, for example, as shown in Figure 12, a rectangular parallelepiped plate-like base section 62a, the insertion hole 62b piercing through the base section 62a, and a projection 62c surrounding the side edge of the base section 62a in an annular shape and projecting in a direction away from the lid 52. In the positive electrode side first insulation plate 62, the positive electrode current collection plate 21, the electrical connection member 32, and the like are housed in a space formed by the base section 62a and the projection 62c. The insertion section 41b of the positive electrode terminal 41 is inserted into the insertion hole 62b. The positive electrode side first insulation plate 62 is formed by, for example, insulating resin.

For example, as shown in Figure 3, the negative electrode side first insulation plate 63 insulates the negative electrode current collection plate 22 and the lid 52. The negative electrode side first insulation plate 63 includes, for example, as shown in Figure 10, a rectangular parallelepiped plate-like base section 63a, the insertion hole 63b piercing through the base section 63a, and a projection 63c surrounding the side edge of the base section 63a in an annular shape and projecting in a direction away from the lid 52. In the negative electrode side first insulation plate 63, the negative electrode current collection plate 22 is housed in a space formed by the base section 63a and the projection 63c. The insertion section 42b of the negative electrode terminal 42 is inserted into the insertion hole 63b. The negative electrode side first insulation plate 63 is formed by, for example, insulating resin.

For example, as shown in Figure 5, the positive electrode side second insulation plate 64 insulates the positive electrode terminal 41 and the lid 52. For example, as shown in Figure 12, the positive electrode side second insulation plate 64 includes the rectangular parallelepiped plate-like base section 64a, the insertion hole 64b piercing through the base section 64a, and a projection 64c surrounding the side edge of the base section 64a in an annular shape and projecting in a direction away from the lid 52. In the positive electrode side second insulation plate 64, the positive electrode terminal 41 is housed in a space formed by the base section 64a and the projection 64c. The insertion section 41b of the positive electrode terminal 41 is inserted into the insertion hole 64b. The positive electrode side second insulation plate 64 is formed by, for example, insulating resin.

For example, as shown in Figure 3, the negative electrode side second insulation plate 65 insulates the negative electrode terminal 42 and the lid 52. The negative electrode side second insulation plate 65 includes, for example, as shown in Figure 10, the rectangular parallelepiped plate-like base section 65a, the insertion hole 65b piercing through the base section 65a, and a projection 65c surrounding the side edge of the base section 65a in an annular shape and projecting in a direction away from the lid 52. In the negative electrode side second insulation plate 65, the negative electrode terminal 42 is housed in a space formed by the base section 65a and the projection 65c. The insertion section 42b of the negative electrode terminal 42 is inserted into the insertion hole 65b. The negative electrode side second insulation plate 65 is formed by, for example, insulating resin.

The sealing body 70 seals the constituent members of the battery 1 and the exterior body 50. The sealing body 70 shown in Figure 2 to Figure 5, Figure 10, and Figure 12 includes a positive electrode side gasket 71 and a negative electrode side gasket 72.

For example, as shown in Figure 5, the positive electrode side gasket 71 insulates the positive electrode side second insulation plate 64 and the lid 52. The positive electrode side gasket 71 is formed in a cylindrical shape. The positive electrode side gasket 71 includes, for example, as shown in Figure 12, a first insertion section 71a having a relatively large outer diameter, a second insertion section 71b continuous to the first insertion section 71a and having a relatively small outer diameter, and an insertion hole 71c piercing through the first insertion section 71a and the second insertion section 71b. The first insertion section 71a of the positive electrode side gasket 71 is inserted into the insertion hole 64b of the positive electrode side second insulation plate 64. The second insertion section 71b of the positive electrode side gasket 71 is inserted into the positive electrode side insertion hole 52a of the lid 52. The insertion section 41b of the positive electrode terminal 41 is inserted into the insertion hole 71c. The positive electrode side gasket 71 is formed by, for example, rubber having insulation and elasticity.

For example, as shown in Figure 3, the negative electrode side gasket 72 insulates the negative electrode side second insulation plate 65 and the lid 52. The negative electrode side gasket 72 is formed in a cylindrical shape. The negative electrode side gasket 72 includes, for example, as shown in Figure 10, a first insertion section 72a having a relatively large outer diameter, a second insertion section 71b continuous to the first insertion section 72a and having a relatively small outer diameter, and an insertion hole 72c piercing through the first insertion section 72a and the second insertion section 71b. The first insertion section 72a of the negative electrode side gasket 72 is inserted into the insertion hole 65b of the negative electrode side second insulation plate 65. The second insertion section 71b of the negative electrode side gasket 72 is inserted into the negative electrode side insertion hole 52b of the lid 52. The insertion section 42b of the negative electrode terminal 42 is inserted into the insertion hole 72c. The negative electrode side gasket 72 is formed by, for example, rubber having insulation and elasticity.

The cleavage valve 80 is a safety valve as shown in Figure 1, Figure 6, Figure 11, Figure 13, and Figure 14. The cleavage valve 80 opens from inside the exterior body 50 to the outside when the pressure inside the exterior body 50 becomes equal to or larger than a predetermined value. That is, the cleavage valve 80 cleaves by the pressure of gas generated inside the exterior body 50 and discharges the gas to outside the exterior body 50.

The cleavage valve 80 is provided at, for example, a cylindrical discharge section 52d formed on the lid 52 of the exterior body 50. The discharge section 52d and the cleavage valve 80 are formed integrally with the lid 52 by concaving the lid 52 from an outer surface 52e to an inner surface 52f of the lid 52. The discharge section 52d projects from the inner surface 52f of the lid 52 toward the charge/discharge body 10. The thickness of the cleavage valve 80 is sufficiently smaller than the thickness of the exterior body 50. That is, the thickness of the cleavage valve 80 is sufficiently smaller than the thicknesses of the container 51 and the lid 52. An edge section 81 of the cleavage valve 80 is provided in an annular shape along the inner surface 52f of the lid 52 in the discharge section 52d.

In the cleavage valve 80, the annular edge section 81 continuous to the discharge section 52d of the lid 52 includes a first edge section 81a and a second edge section 81b. The first edge section 81a is formed in an arc shape. The second edge section 81b is formed in a linear shape. The edge section 81 of the cleavage valve 80 is formed in a D shape. The first edge section 81a includes a groove.

The cleavage valve 80 is curved in a convex shape in a direction approaching the charge/discharge body 10. That is, the cleavage valve 80 is curved toward inside the battery 1. In the cleavage valve 80, the curvature of a first curved section 82 curved in a convex shape from the first edge section 81a is smaller than the curvature of a second curved section 83 curved in a convex shape from the second edge section 81b. A curvature is the reciprocal of the radius of a curved part. The first curved section 82 is tilted less than the second curved section 83. Position P1 of a distal end section 84 of the cleavage valve 80 is positioned closer to the second edge section 81b than position P2 of the center of the cleavage valve 80. Accordingly, the edge section 81 is formed in a rotationally asymmetric annular shape.

As Modification 1 of the first embodiment, the edge section 81 of the cleavage valve 80 may be provided in an annular shape along the outer surface 52e of the lid 52 in the discharge section 52d. As Modification 2 of the first embodiment, the edge section 81 of the cleavage valve 80 may be provided in annular shapes at internal parts separated from the outer surface 52e and the inner surface 52f of the lid 52 in the discharge section 52d. In Modification 1 and Modification 2 of the first embodiment, the distal end section 84 of the cleavage valve 80 may be positioned inside the discharge section 52d. That is, the distal end section 84 of the cleavage valve 80 may be positioned between the outer surface 52e and the inner surface 52f of the lid 52. As Modification 3 of the first embodiment, the cleavage valve 80 may be provided at the container 51.

### (Actuation of cleavage valve 80 in first embodiment)

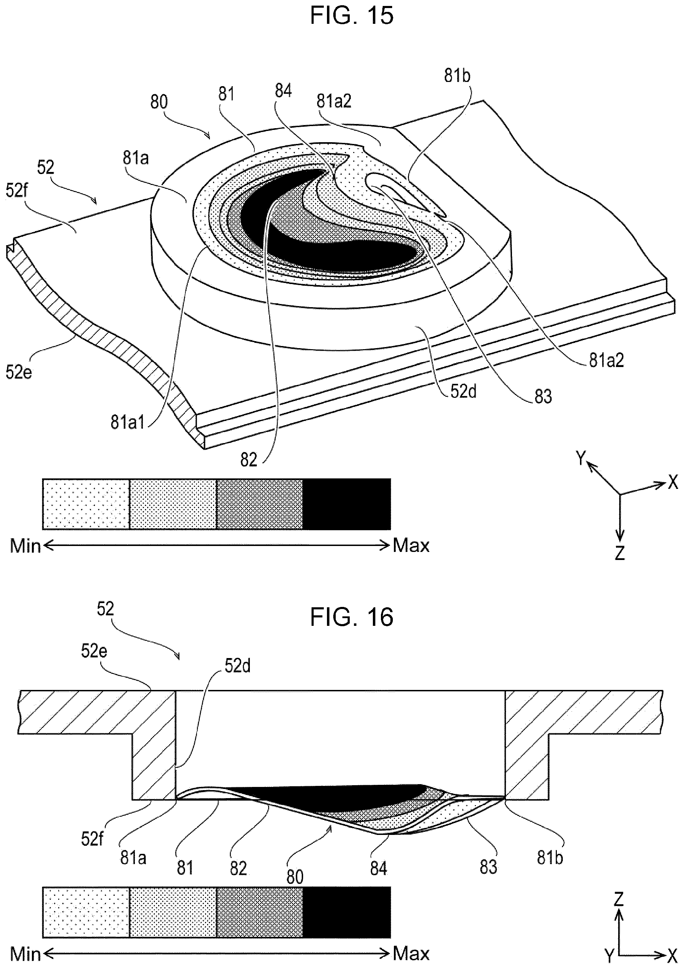

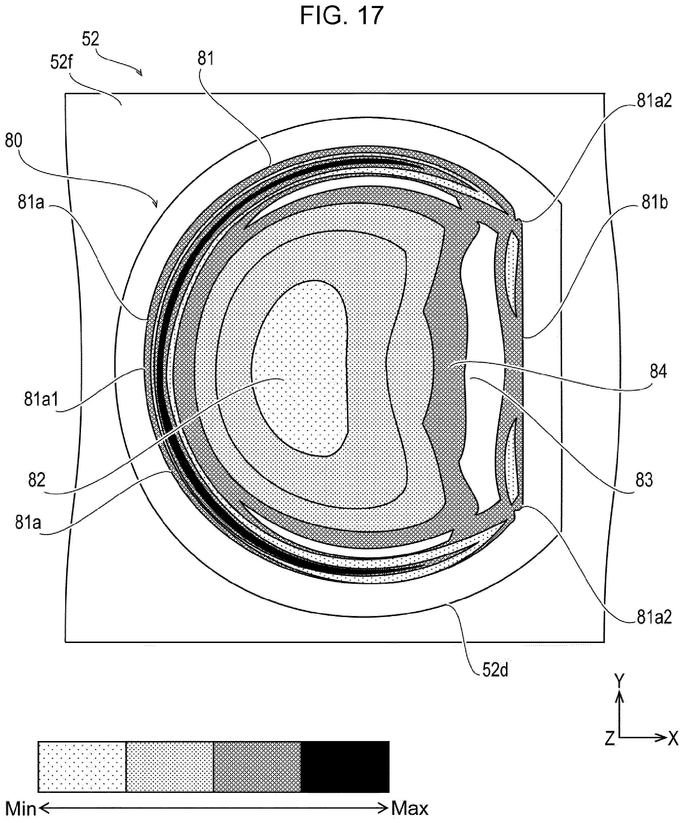

Actuation of the cleavage valve 80 in the first embodiment is explained with reference to Figure 15 to Figure 17.

Figure 15 to Figure 17 show simulated deformation of the cleavage valve 80 receiving stress. A grayscale from Min to Max which is shown in Figure 15 to Figure 17 represents the magnitude of relative deformation of the cleavage valve 80. Min indicates a part where deformation is relatively small in the cleavage valve 80. Max indicates a part where deformation is relatively large in the cleavage valve 80. The cleavage valve 80 receives larger pressing force in a direction from the charge/discharge body 10 to outside the lid 52 as the pressure inside the exterior body 50 increases. Accordingly, the cleavage valve 80 deforms in a direction departing from the charge/discharge body 10 from a state of being curved in a convex shape in the direction approaching the charge/discharge body 10. In the cleavage valve 80, the curvature of the first curved section 82 is smaller than the curvature of the second curved section 83.

Accordingly, the first curved section 82 has lower stiffness against pressing force in the direction from the charge/discharge body 10 to outside the lid 52 than the second curved section 83. That is, the first curved section 82 more easily deforms from the charge/discharge body 10 to outside the lid 52 than the second curved section 83. Further, in the first curved section 82, a central section 81a1 of the first edge section 81a has a relatively smallest curvature and thus relatively most easily deforms.

Accordingly, when the pressure inside the exterior body 50 becomes equal to or larger than the predetermined value, first, the central section 81a1 of the first edge section 81a cleaves in the cleavage valve 80. Subsequently, the cleavage valve 80 immediately cleaves along a groove formed at the first edge section 81a from the central section 81a1 of the first edge section 81a to an end section 81a2. Finally, the cleavage valve 80 becomes a state in which the first edge section 81a cleaves but the second edge section 81b does not cleave or a state in which the first edge section 81a and the second edge section 81b cleave.

### (Effects of cleavage valve 80 in first embodiment)

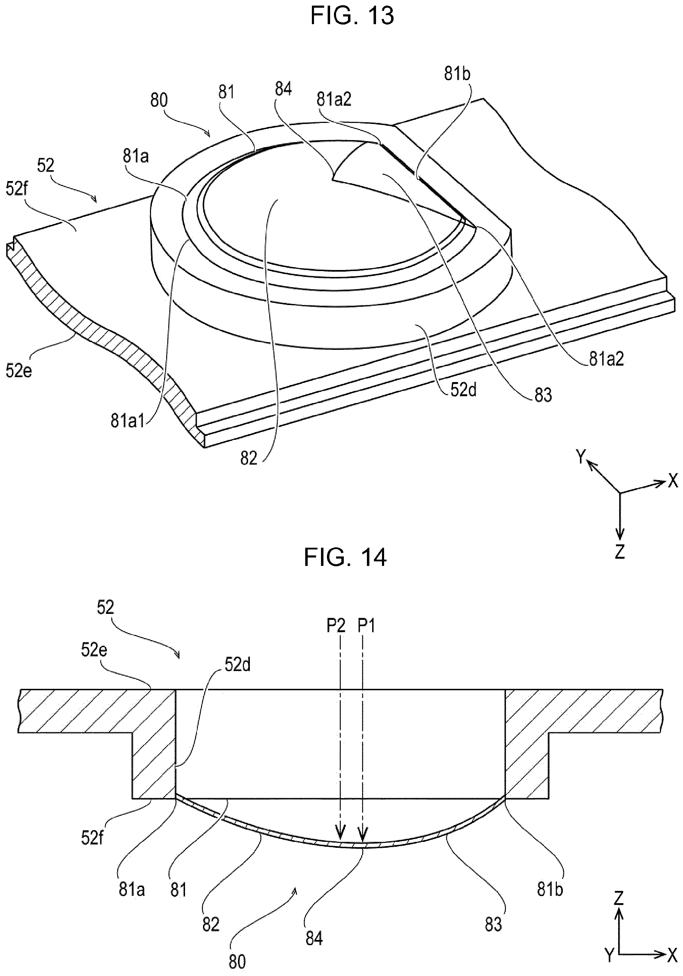

Effects of the cleavage valve 80 in the first embodiment are explained with reference to Figure 13 to Figure 17.

The edge section 81 of the cleavage valve 80 includes the first edge section 81a and the second edge section 81b. The first edge section 81a is formed in an arc shape. The second edge section 81b is formed in a linear shape. The first edge section 81a includes a groove. With such a configuration, difference can be provided between the first edge section 81a and the second edge section 81b in stiffness against pressing force received from the charge/discharge body 10 side. That is, the first edge section 81a in an arc shape is formed more fragile than the second edge section 81b in a linear shape to set relatively low stiffness. The first edge section 81a in an arc shape is supported by the second edge section 81b in a linear shape. Accordingly, the stiffness of the first edge section 81a in an arc shape can be set to relatively high compared with a configuration with an annular edge section rotationally symmetric (exact circular shape) or bilaterally symmetric (rectangular shape) as in a conventional cleavage valve. That is, the cleavage valve 80 can have relatively high durability.

When the first edge section 81a cleaves from a state with relatively high durability, a time from start to end of the cleavage can be relatively shortened compared with a configuration with an annular edge section rotational symmetry (exact circular shape) or bilaterally symmetric (rectangular shape) as in a conventional cleavage valve. That is, since a state in which relatively high durability is maintained ends once cleavage starts, the cleavage valve 80 can develop the cleavage at high speed. Accordingly, the cleavage valve 80 can efficiently discharge gas inside the battery when cleaving.

Accordingly, the cleavage valve 80 of the battery 1 has relatively high durability and can efficiently discharge gas inside the battery when cleaving.

The cleavage valve 80 is curved in a convex shape toward the direction approaching the charge/discharge body 10. With such a configuration, the cleavage valve 80 can have relatively high stiffness against stress received from the charge/discharge body 10 side. That is, cleavage pressure of the cleavage valve 80 can be relatively high. Moreover, with such a configuration, the cleavage valve 80 can withstand increase in the internal pressure of the exterior body 50 along with initial charging of the charge/discharge body 10 at, for example, manufacturing of the battery 1.

In the cleavage valve 80, the curvature of the first curved section 82 curved in a convex shape from the first edge section 81a is smaller than the curvature of the second curved section 83 curved in a convex shape from the second edge section 81b. With such a configuration, difference can be provided between the first curved section 82 and the second curved section 83 in stiffness against pressing force received from the charge/discharge body 10 side. That is, the first curved section 82 starting at the first edge section 81a in an arc shape can be formed more fragile than the second curved section 83 starting at the second edge section 81b in a linear shape. Accordingly, in the cleavage valve 80, the first curved section 82 can be selectively caused to cleave.

Position P1 of the distal end section 84 of the cleavage valve 80 is positioned closer to the second edge section 81b than position P2 of the center of the cleavage valve 80. With such a configuration, in the cleavage valve 80, difference can be easily provided between the outer shape of the first curved section 82 curved in a convex shape from the first edge section 81a and the outer shape of the second curved section 83 curved in a convex shape from the second edge section 81b.

The edge section 81 is formed in a rotationally asymmetric annular shape. With such a configuration, in the cleavage valve 80, difference can be easily provided between the outer shape of the first curved section 82 curved in a convex shape from the first edge section 81a and the outer shape of the second curved section 83 curved in a convex shape from the second edge section 81b.

### [Second embodiment]

A cleavage valve 180 included in a battery 2 in a second embodiment is explained.

### (Configuration of cleavage valve 180 in second embodiment)

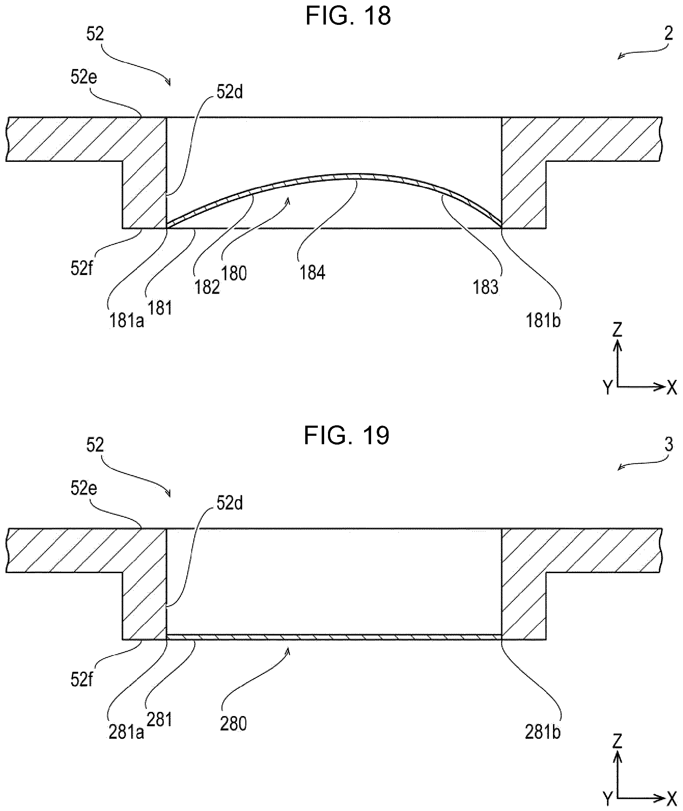

A configuration of the cleavage valve 180 in the second embodiment is explained with reference to Figure 18.

In the second embodiment, components different from the components in the first embodiment are explained. The cleavage valve 180 is curved in a convex shape in the direction departing from the charge/discharge body 10. That is, the cleavage valve 180 is curved toward outside the battery 1. The cleavage valve 180 is formed in an inversion symmetric shape with respect to the XY plane of the lid 52 unlike the cleavage valve 80. The cleavage valve 180 includes an edge section 181, a first edge section 181a, a second edge section 181b, a first curved section 182, a second curved section 183, and a distal end section 184. The edge section 181 of the cleavage valve 180 is provided in an annular shape along the inner surface 52f of the lid 52 in the discharge section 52d. The distal end section 184 of the cleavage valve 180 is positioned inside the discharge section 52d of the lid 52.

As Modification 1 of the second embodiment, the distal end section 184 of the cleavage valve 180 may project from the discharge section 52d of the lid 52 to outside the battery 1 across the outer surface 52e of the lid 52. As Modification 2 of the second embodiment, the edge section 181 of the cleavage valve 180 may be provided in an annular shape along the outer surface 52e of the lid 52 in the discharge section 52d.

### (Effects of cleavage valve 180 in second embodiment)

Effects of the cleavage valve 180 in the second embodiment are explained with reference to Figure 18.

The cleavage valve 180 is curved in a convex shape in the direction departing from the charge/discharge body 10. With such a configuration, the cleavage valve 180 and the charge/discharge body 10 can be relatively separated from each other. That is, with such a configuration, the volume of the charge/discharge body 10 inside the exterior body 50 can be relatively increased. Accordingly, energy density of the battery 2 can be increased.

### [Third embodiment]

A cleavage valve 280 included in a battery 3 in a third embodiment is explained.

### (Configuration of cleavage valve 280 in third embodiment)

A configuration of the cleavage valve 280 in the third embodiment is explained with reference to Figure 19.

In the third embodiment, components different from the components in the first and second embodiments are explained. The cleavage valve 280 extends in a flat plate shape along the outer shape of the lid 52. A first edge section 281a and a second edge section 281b of an edge section 281 of the cleavage valve 280 are provided in annular shapes along the inner surface 52f of the lid 52 in the discharge section 52d.

As a modification of the third embodiment, the edge section 281 of the cleavage valve 280 may be provided in an annular shape along the outer surface 52e of the lid 52 in the discharge section 52d.

### (Effects of cleavage valve 280 in third embodiment)

Effects of the cleavage valve 280 in the third embodiment are explained with reference to Figure 19.

The cleavage valve 280 extends in a flat plate shape along the outer shape of the lid 52. With such a configuration, the cleavage valve 280 can be easily formed. Moreover, with such a configuration, the cleavage valve 280 and the charge/discharge body 10 can be relatively separated from each other. That is, with such a configuration, the volume of the charge/discharge body 10 inside the exterior body 50 can be relatively increased. Accordingly, energy density of the battery 3 can be increased.

### [Fourth embodiment]

A cleavage valve 380 and the like included in a battery 4 in a fourth embodiment are explained.

### (Configurations of cleavage valve 380 and the like in fourth embodiment)

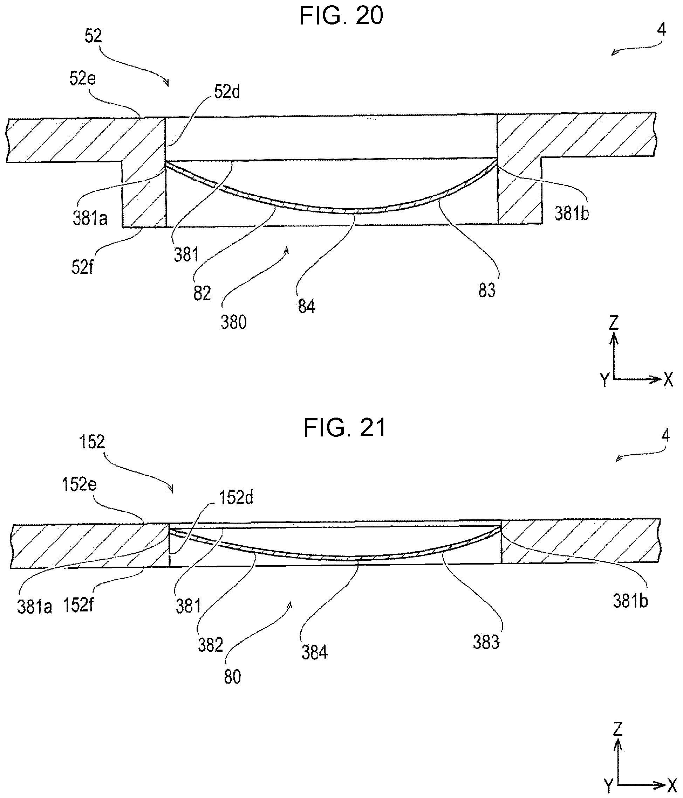

Configurations of the cleavage valve 380 and the like in the fourth embodiment are explained with reference to Figure 20 and Figure 21.

In the fourth embodiment, components different from the components in the first embodiment are explained. A first edge section 381a and a second edge section 381b of an edge section 381 of the cleavage valve 380 are provided in annular shapes at internal parts separated from the outer surface 52e and the inner surface 52f of the lid 52 in the discharge section 52d. The cleavage valve 380 is curved in a convex shape in the direction approaching the charge/discharge body 10. A distal end section 484 of a cleavage valve 480 is positioned inside the discharge section 52d of the lid 52. Accordingly, the entire cleavage valve 380 is positioned between the outer surface 52e and the inner surface 52f of the lid 52.

As Modification 1 of the fourth embodiment, a distal end section 384 of the cleavage valve 380 may project from the discharge section 52d to inside the battery 1 across the inner surface 52f of the lid 52. As Modification 2 of the fourth embodiment, the cleavage valve 380 may be curved in a convex shape in the direction departing from the charge/discharge body 10. In Modification 2 of the fourth embodiment, the distal end section 384 of the cleavage valve 380 may project from the discharge section 52d of the lid 52 to outside the battery 1 across the outer surface 52e of the lid 52. As Modification 3 of the fourth embodiment, as shown in Figure 21, the cleavage valve 480 may be provided at a discharge section 152d flush with a lid 152 in the height direction Z.

### (Effects of cleavage valve 380 and the like in fourth embodiment)

Effects of the cleavage valve 380 and the like in the fourth embodiment are explained with reference to Figure 20 and Figure 21.

At least the edge section 381 of the cleavage valve 380 is positioned between the outer surface 52e and the inner surface 52f facing each other and constituting a thickness part of the lid 52. With such a configuration, the cleavage valve 380 and the charge/discharge body 10 can be relatively separated from each other. That is, with such a configuration, the volume of the charge/discharge body 10 inside the exterior body 50 can be relatively increased. Accordingly, energy density of the battery 4 can be increased. Moreover, with such a configuration, it is possible to prevent interference between the cleavage valve 380 and any other member at manufacturing of the battery 4.

The entire cleavage valve 380 is positioned between the outer surface 52e and the inner surface 52f. With such a configuration, energy density of the battery 4 can be increased most. Moreover, with such a configuration, it is possible to most prevent interference between the cleavage valve 380 and any other member at manufacturing of the battery 4.

### [Fifth embodiment]

A cleavage valve 580 included in a battery 5 in a fifth embodiment is explained.

### (Configuration of cleavage valve 580 in fifth embodiment)

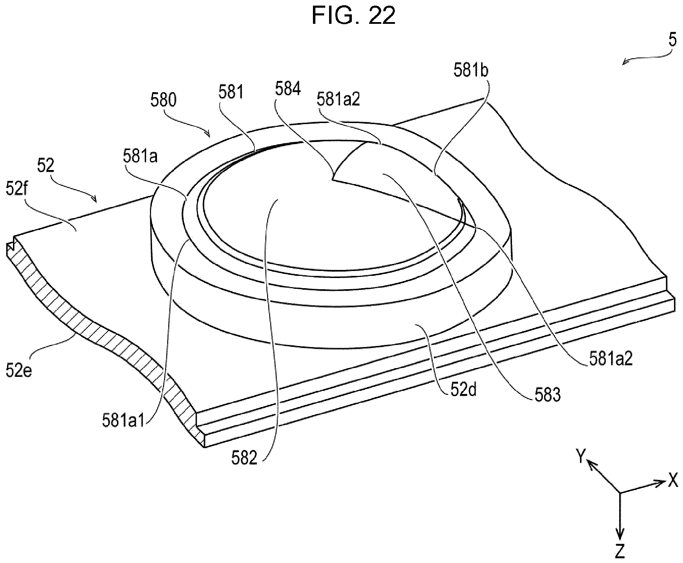

A configuration of the cleavage valve 580 in the fifth embodiment is explained with reference to Figure 22.

In the fifth embodiment, components different from the components in the first embodiment are explained. In the cleavage valve 580 in the fifth embodiment, a second edge section 581b of an edge section 581 is formed in an arc shape, not in a linear shape. The cleavage valve 580 includes the edge section 581, a first edge section 581a, the second edge section 581b, a first curved section 582, a second curved section 583, and a distal end section 584. The annular edge section 581 of the cleavage valve 580, which is continuous to the lid 52 includes the first edge section 581a and the second edge section 581b. Similarly to the first edge section 81a, the first edge section 581a is formed in an arc shape. Unlike the second edge section 81b in a linear shape, the second edge section 581b is formed with a radius larger than that of the first edge section 581a. In the cleavage valve 580, the curvature of the first curved section 582 curved in a convex shape from the first edge section 581a is smaller than the curvature of the second curved section 583 curved in a convex shape from the second edge section 581b.

The configuration of the cleavage valve 580 can be applied to the second and fourth embodiments.

### (Effects of cleavage valve 580 in fifth embodiment)

Effects of the cleavage valve 580 in the fifth embodiment are explained with reference to Figure 22.

In the cleavage valve 580, the first edge section 581a of the edge section 581 is formed in an arc shape. The second edge section 581b of the edge section 581 is formed with a radius larger than that of the first edge section 581a. With such a configuration, cleavage pressure of the cleavage valve 580 can be set to a predetermined value by changing the curvature of the second edge section 581b.

The battery of the present invention is not limited to the configurations described in the embodiments and can be configured as appropriate based on the contents described in the claims.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. The battery of the present invention is not limited to a configuration in which a charge/discharge body is sealed with a container and a lid. The battery of the present invention can be applied to a configuration in which a charge/discharge body is sealed with a laminate film. Each of the embodiments is explained in detail or simply in order to clearly explain the present invention and does not always need to include all the components explained above and may include not-shown components. A part of components in a certain embodiment may be deleted, substituted by components in other embodiments, or combined with components in the other embodiments.

### [Reference Signs List]

1, 2, 3, 4, 5, 6 battery, 10 charge/discharge body, 51 container (exterior body), 52 lid (exterior body), 52d discharge section, 52e outer surface, 52f inner surface, 80 cleavage valve (safety valve), 81 edge section, 81a first edge section, 81a1 central section, 81a2 end section, 81b second edge section, 82 first curved section, 83 second curved section, 84 distal end section, 152 lid, 152d discharge section, 180 cleavage valve (safety valve), 181 edge section, 181 edge section, 181a first edge section, 181b second edge section, 182 first curved section, 183 second curved section, 184 distal end section, 280 cleavage valve (safety valve), 281 edge section, 281a first edge section, 281b second edge section, 380 cleavage valve (safety valve), 381 edge section, 381a first edge section, 381b second edge section, 384 distal end section, 480 cleavage valve (safety valve), 484 distal end section, 580 cleavage valve (safety valve), 581 edge section, 581a first edge section, 581b second edge section, 582 first curved section, 583 second curved section, 584 distal end section.

## Claims

1. A battery comprising:
a charge/discharge body;
an exterior body in which the charge/discharge body is housed; and
a safety valve provided at the exterior body and configured to open from inside the exterior body to outside when pressure inside the exterior body becomes equal to or larger than a predetermined value, wherein
thickness of the safety valve is smaller than thickness of the exterior body,
an annular edge section of the safety valve, which is continuous to the exterior body includes a first edge section formed in an arc shape and a second edge section formed with a radius larger than a radius of the first edge section or formed in a linear shape, and
the first edge section includes a groove.

2. The battery according to claim 1, wherein the safety valve is curved in a convex shape in a direction approaching the charge/discharge body.

3. The battery according to claim 1, wherein the safety valve is curved in a convex shape in a direction departing from the charge/discharge body.

4. The battery according to claim 2 or 3, wherein in the safety valve, a curvature of a first curved section curved in a convex shape from the first edge section is smaller than a curvature of a second curved section curved in a convex shape from the second edge section.

5. The battery according to claim 2 or 3, wherein a distal end section of the safety valve is positioned closer to the second edge section than a central section of the safety valve.

6. The battery according to claim 1, wherein the safety valve extends in a flat plate shape along an outer shape of the exterior body.

7. The battery according to claim 1, wherein the edge section is formed in a rotationally asymmetric annular shape.

8. The battery according to claim 1, wherein at least the edge section of the safety valve is positioned between an outer surface and an inner surface facing each other and constituting a thickness part of the exterior body.

9. The battery according to claim 8, wherein the entire safety valve is positioned between the outer surface and the inner surface.
